# EUROPEAN PATENT APPLICATION

(11) **EP 4 568 296 A1**
(43) Date of publication of application: **11.06.2025**
(21) Application number: 23849112.0
(22) Date of filing: 29.06.2023
(51) Int. Cl.: H04W 4/02

(54) **DOWNLINK LOCATION METHOD, DEVICE, AND PROCESSOR-READABLE STORAGE MEDIUM**

(30) Priority: 03.08.2022 CN 202210925844
(71) Applicant: Datang Mobile Communications Equipment Co., Ltd., Beijing 100085 (CN)
(72) Inventor: SUN, Jiancheng, Beijing 100085 (CN); LIANG, Jing, Beijing 100085 (CN); ZHANG, Xiangdong, Beijing 100085 (CN); MIAO, Deshan, Beijing 100085 (CN); JIA, Yinan, Beijing 100085 (CN)
(74) Representative: dompatent von Kreisler Selting Werner - Partnerschaft von Patent- und Rechtsanwälten mbB
(86) International application number: PCT/CN2023/103938
(87) International publication number: WO 2024/027402

(57) **Abstract**

A downlink positioning method, device and processor-readable storage medium are provided, which belong to the field of communication technology. The method comprises: a network device receives a downlink positioning request message sent by an LMF; the network device determines and sends a plurality of positioning measurement time points, information of respective positioning measurement resource corresponding to each of the positioning measurement time points, and satellite information corresponding to each of the positioning measurement resources to the LMF; the LMF sends such information to a terminal, and the terminal performs downlink positioning measurement according to the information.

## Description

### CROSS-REFERENCE TO RELATED APPLICATION

The present disclosure claims priority to Chinese Patent Application No. 202210925844.1 filed in China on August 3, 2022, the entire contents of which are incorporated herein by reference.

### TECHNICAL FIELD

The present disclosure relates to the field of communications technology, and in particular to a downlink positioning method, device, and processor-readable storage medium.

### BACKGROUND

Currently, 4th-Generation mobile communication (4G)/5th-Generation mobile communication (5G) Radio Access Technology (RAT) dependent positioning methods are all achieved through the reception and transmission of multiple Transmission-Reception Points (TRPs). Usually, the plurality of TRPs are deployed in each cell.

However, in a satellite system, a specific network coverage is achieved by satellites, and the TRPs can only be deployed on the satellite side. In addition, in a satellite Internet system, the ground coverage is similar to that of a cellular network. Especially for a low-orbit constellation, it is difficult to require a User Equipment (UE) to always be within the effective coverage of multiple satellites, and it is difficult to achieve the multi-satellite positioning.

Therefore, it is difficult to apply the current 4G/5G RAT dependent positioning methods to the satellite Internet system.

### SUMMARY

Embodiments of the present disclosure provide a downlink positioning method, device, and processor-readable storage medium to solve the problem that the positioning methods in the related art are difficult to be applied to a satellite Internet system.

The present disclosure provides in some embodiments a downlink positioning method, including:
receiving, by a network device, a downlink positioning request message sent by a Location Management Function (LMF);
determining, by the network device, a plurality of positioning measurement time points, information of respective positioning measurement resource corresponding to each of the positioning measurement time points, and satellite information corresponding to each of the positioning measurement resources;
sending, by the network device to the LMF, the plurality of positioning measurement time points, the information of the respective positioning measurement resource corresponding to each of the positioning measurement time points, and the satellite information corresponding to each of the positioning measurement resources.

Optionally, the satellite information includes one or more of the followings:
satellite identification information;
satellite location information;
TRP information, wherein the TRP information includes identification information of one or more TRPs, and location information of each of the TRPs.

Optionally, the downlink positioning request message includes time information of a downlink positioning measurement;
the determining, by the network device, the plurality of positioning measurement time points, including:
determining, by the network device, the plurality of positioning measurement time points according to the time information of the downlink positioning measurement.

Optionally, the time information of the downlink positioning measurement includes one or more of the followings:
one or more time points for performing the downlink positioning measurement;
time requirement information for the downlink positioning measurement.

Optionally, the time requirement information for the downlink positioning measurement includes one or more of the followings:
start time of the downlink positioning measurement;
end time of the downlink positioning measurement;
a time interval between the downlink positioning measurements;
a quantity of the downlink positioning measurements.

The present disclosure further provides in some embodiments a downlink positioning method, including:
sending, by a Location Management Function (LMF), a downlink positioning request message to a network device;
receiving, by the LMF from the network device, a plurality of positioning measurement time points, information of respective positioning measurement resource corresponding to each of the positioning measurement time points, and satellite information corresponding to each of the positioning measurement resources;
sending, by the LMF to a terminal, the plurality of positioning measurement time points and the information of the respective positioning measurement resource corresponding to each of the positioning measurement time points.

Optionally, the method further includes:
sending, by the LMF to the terminal, the satellite information corresponding to each of the positioning measurement resources.

Optionally, the satellite information includes one or more of the followings:
satellite identification information;
satellite location information;
TRP information, wherein the TRP information includes identification information of one or more TRPs, and location information of each of the TRPs.

Optionally, the downlink positioning request message includes time information of a downlink positioning measurement;
the time information of the downlink positioning measurement is used by the network device to determine the plurality of positioning measurement time points.

Optionally, the time information of the downlink positioning measurement includes one or more of the followings:
one or more time points for performing the downlink positioning measurement;
time requirement information for the downlink positioning measurement.

Optionally, the time requirement information for the downlink positioning measurement includes one or more of the followings:
start time of the downlink positioning measurement;
end time of the downlink positioning measurement;
a time interval between the downlink positioning measurements;
a quantity of the downlink positioning measurements.

Optionally, the method further includes:
receiving, by the LMF, a plurality of positioning measurement results sent by the terminal;
determining, by the LMF, a positioning calculation result according to the plurality of positioning measurement results;
wherein the plurality of positioning measurement results are obtained by the terminal through performing downlink positioning measurement at each of the plurality of positioning measurement time points according to the respective positioning measurement resource corresponding to each of the positioning measurement time points.

Optionally, the method further includes:
receiving, by the LMF, a positioning calculation result sent by the terminal;
wherein the positioning calculation result is determined by the terminal according to the plurality of positioning measurement results, and the plurality of positioning measurement results are obtained by the terminal through performing downlink positioning measurement at each of the plurality of positioning measurement time points according to the respective positioning measurement resource corresponding to each of the positioning measurement time points.

The present disclosure further provides in some embodiments a downlink positioning method, including:
receiving, by a terminal from a Location Management Function (LMF), a plurality of positioning measurement time points and information of respective positioning measurement resource corresponding to each of the positioning measurement time points;
performing, by a terminal, downlink positioning measurement at each of the plurality of positioning measurement time points according to the respective positioning measurement resource corresponding to each of the positioning measurement time points;
wherein the plurality of positioning measurement time points and the information of the respective positioning measurement resource corresponding to each of the positioning measurement time points are determined by a network device.

Optionally, the method further includes:
the terminal receives satellite information corresponding to each of the positioning measurement resources sent by the LMF.

Optionally, the satellite information includes one or more of the followings:
satellite identification information;
satellite location information;
TRP information, wherein the TRP information includes identification information of one or more TRPs, and location information of each of the TRPs.

The satellite information corresponding to each of the positioning measurement resources is determined by the network device.

Optionally, the method further includes:
obtaining, by the terminal, a plurality of positioning measurement results;
sending, by the terminal, the plurality of positioning measurement results to the LMF.

Optionally, the method further includes:
obtaining, by the terminal, a plurality of positioning measurement results;
determining, by the terminal, a positioning calculation result according to the plurality of positioning measurement results;
sending, by the terminal, the positioning calculation result to the LMF.

The present disclosure further provides in some embodiments a network device, including: a memory, a transceiver, and a processor, wherein
the memory is configured for storing a computer program; the transceiver is configured for sending and receiving data under the control of the processor; and the processor is configured for reading the computer program in the memory and performing following operations:
receiving the downlink positioning request message sent by LMF;
determining a plurality of positioning measurement time points, information of positioning measurement resources corresponding to each of the positioning measurement time points, and satellite information corresponding to each of the positioning measurement resources;
sending the plurality of positioning measurement time points, information of the respective positioning measurement resource corresponding to each of the positioning measurement time points, and satellite information corresponding to each of the positioning measurement resources to the LMF.

Optionally, the satellite information includes one or more of the followings:
satellite identification information;
satellite location information;
TRP information, wherein the TRP information includes identification information of one or more TRPs, and location information of each of the TRPs.

Optionally, the downlink positioning request message includes time information of a downlink positioning measurement;
the processor configured to execute the operation of the network device to determine multiple positioning measurement time points includes:
the network device determines the plurality of positioning measurement time points according to the time information of the downlink positioning measurement.

Optionally, the time information of the downlink positioning measurement includes one or more of the followings:
one or more time points for performing the downlink positioning measurement;
time requirement information for the downlink positioning measurement.

Optionally, the time requirement information for the downlink positioning measurement includes one or more of the followings:
start time of the downlink positioning measurement;
end time of the downlink positioning measurement;
a time interval between the downlink positioning measurements;
a quantity of the downlink positioning measurements.

The present disclosure provides in some embodiments a LMF, including: a memory, a transceiver, and a processor, wherein
the memory is configured for storing a computer program; the transceiver is configured for sending and receiving data under the control of the processor; and the processor is configured for reading the computer program in the memory and performing following operations:
sending a downlink positioning request message to a network device;
receiving a plurality of positioning measurement time points, information of respective positioning measurement resource corresponding to each of the positioning measurement time points, and satellite information corresponding to each of the positioning measurement resources, sent by the network device;
sending, to a terminal, the plurality of positioning measurement time points and the information of the respective positioning measurement resource corresponding to each of the positioning measurement time points.

Optionally, the satellite information includes one or more of the followings:
satellite identification information;
satellite location information;
TRP information, wherein the TRP information includes identification information of one or more TRPs, and location information of each of the TRPs.

Optionally, the downlink positioning request message includes time information of a downlink positioning measurement;
the time information of the downlink positioning measurement is used by the network device to determine the plurality of positioning measurement time points.

Optionally, the time information of the downlink positioning measurement includes one or more of the followings:
one or more time points for performing the downlink positioning measurement;
time requirement information for the downlink positioning measurement.

Optionally, the time requirement information for the downlink positioning measurement includes one or more of the followings:
start time of the downlink positioning measurement;
end time of the downlink positioning measurement;
a time interval between the downlink positioning measurements;
a quantity of the downlink positioning measurements.

Optionally, the processor is further configured to:
the satellite information corresponding to each of the positioning measurement resources is sent to the terminal.

Optionally, the processor is further configured to:
receive a plurality of positioning measurement results sent by the terminal;
determine a positioning calculation result according to the plurality of positioning measurement results;
wherein the plurality of positioning measurement results are obtained by the terminal through performing downlink positioning measurement at each of the plurality of positioning measurement time points according to the respective positioning measurement resource corresponding to each of the positioning measurement time points.

Optionally, the processor is further configured to:
receive a positioning calculation result sent by the terminal;
wherein the positioning calculation result is determined by the terminal according to the plurality of positioning measurement results, and the plurality of positioning measurement results are obtained by the terminal through performing downlink positioning measurement at each of the plurality of positioning measurement time points according to the respective positioning measurement resource corresponding to each of the positioning measurement time points.

The present disclosure further provides in some embodiments a terminal, including: a memory, a transceiver, and a processor, wherein
the memory is configured for storing a computer program; the transceiver is configured for sending and receiving data under the control of the processor; and the processor is configured for reading the computer program in the memory and performing following operations:
receiving, from a Location Management Function (LMF), a plurality of positioning measurement time points and information of respective positioning measurement resource corresponding to each of the positioning measurement time points;
performing downlink positioning measurement at each of the plurality of positioning measurement time points according to the respective positioning measurement resource corresponding to each of the positioning measurement time points;
wherein the plurality of positioning measurement time points and the information of the respective positioning measurement resource corresponding to each of the positioning measurement time points are determined by the network device.

Optionally, the processor is further configured to:
receive, from the LMF, satellite information corresponding to each of the positioning measurement resources;
wherein the satellite information corresponding to each of the positioning measurement resources is determined by the network device.

Optionally, the satellite information includes one or more of the followings:
satellite identification information;
satellite location information;
TRP information, wherein the TRP information includes identification information of one or more TRPs, and location information of each of the TRPs.

Optionally, the processor is further configured to:
obtain a plurality of positioning measurement results;
send the plurality of positioning measurement results to the LMF .

Optionally, the processor is further configured to:
obtain a plurality of positioning measurement results;
determine a positioning calculation result according to the plurality of positioning measurement results;
send the positioning calculation result to the LMF.

The present disclosure further provides in some embodiments a network device, including:
a first receiving module, configured to receive a downlink positioning request message sent by the LMF;
a first determination module, configured to determine a plurality of positioning measurement time points, information of respective positioning measurement resource corresponding to each of the positioning measurement time points, and satellite information corresponding to each of the positioning measurement resources;
a first sending module, configured to send, to the LMF, the plurality of positioning measurement time points, the information of the respective positioning measurement resource corresponding to each of the positioning measurement time points, and the satellite information corresponding to each of the positioning measurement resources.

Optionally, the satellite information includes one or more of the followings:
satellite identification information;
satellite location information;
TRP information, wherein the TRP information includes identification information of one or more TRPs, and location information of each of the TRPs.

Optionally, the downlink positioning request message includes time information of a downlink positioning measurement;
the first determining module is further configured to:
determine the plurality of positioning measurement time points according to the time information of the downlink positioning measurement .

Optionally, the time information of the downlink positioning measurement includes one or more of the followings:
one or more time points for performing the downlink positioning measurement;
time requirement information for the downlink positioning measurement.

Optionally, the time requirement information for the downlink positioning measurement includes one or more of the followings:
start time of the downlink positioning measurement;
end time of the downlink positioning measurement;
a time interval between the downlink positioning measurements;
a quantity of the downlink positioning measurements.

The present disclosure further provides in some embodiments a LMF, including:
a second sending module, configured to send a downlink positioning request message to the network device;
a second receiving module, configured to receive a plurality of positioning measurement time points, information of respective positioning measurement resource corresponding to each of the positioning measurement time points, and satellite information corresponding to each of the positioning measurement resources;
the third sending module, configured to send, to the terminal, the plurality of positioning measurement time points and the information of the respective positioning measurement resource corresponding to each of the positioning measurement time points.

Optionally, the LMF further includes:
the fourth sending module, configured to send the satellite information corresponding to each of the positioning measurement resources to the terminal.

Optionally, the satellite information includes one or more of the followings:
satellite identification information;
satellite location information;
TRP information, wherein the TRP information includes identification information of one or more TRPs, and location information of each of the TRPs.

Optionally, the downlink positioning request message includes time information of a downlink positioning measurement;
the time information of the downlink positioning measurement is used by the network device to determine the plurality of positioning measurement time points.

Optionally, the time information of the downlink positioning measurement includes one or more of the followings:
one or more time points for performing the downlink positioning measurement;
time requirement information for the downlink positioning measurement.

Optionally, the time requirement information for the downlink positioning measurement includes one or more of the followings:
start time of the downlink positioning measurement;
end time of the downlink positioning measurement;
a time interval between the downlink positioning measurements;
a quantity of the downlink positioning measurements.

Optionally, the LMF further includes:
a third receiving module, configured to receive a plurality of positioning measurement results sent by the terminal;
a second determining module, configured to determine a positioning calculation result according to the plurality of positioning measurement results;
wherein the plurality of positioning measurement results are obtained by the terminal through performing downlink positioning measurement at each of the plurality of positioning measurement time points according to the respective positioning measurement resource corresponding to each of the positioning measurement time points.

Optionally, the LMF further includes:
a fourth receiving module, configured to receive the positioning calculation result sent by the terminal;
wherein the positioning calculation result is determined by the terminal according to the plurality of positioning measurement results, and the plurality of positioning measurement results are obtained by the terminal through performing downlink positioning measurement at each of the plurality of positioning measurement time points according to the respective positioning measurement resource corresponding to each of the positioning measurement time points.

The present disclosure also provides a terminal, including:
a fifth receiving module, configured to receive a plurality of positioning measurement time points and information of respective positioning measurement resource corresponding to each of the positioning measurement time points sent by the LMF;
an execution module, configured to perform downlink positioning measurement at each of the plurality of positioning measurement time points according to the respective positioning measurement resource corresponding to each of the positioning measurement time points;
wherein the plurality of positioning measurement time points and the information of the respective positioning measurement resource corresponding to each of the positioning measurement time points are determined by the network device.

Optionally, the terminal further includes:
a sixth receiving module, configured to receive satellite information corresponding to each of the positioning measurement resources sent by the LMF;
wherein the satellite information corresponding to each of the positioning measurement resources is determined by the network device.

Optionally, the satellite information includes one or more of the followings:
satellite identification information;
satellite location information;
TRP information, wherein the TRP information includes identification information of one or more TRPs, and location information of each of the TRPs.

Optionally, the terminal further includes:
a first obtaining module, configured to obtain a plurality of positioning measurement results;
a fourth sending module, configured to send the plurality of positioning measurement results to the LMF.

Optionally, the terminal further includes:
a second obtaining module, configured to obtain a plurality of positioning measurement results;
a third determining module, configured to determine a positioning calculation result according to the plurality of positioning measurement results;
a fifth sending module, configured to send the positioning calculation result to the LMF.

The present disclosure further provides in some embodiments a processor-readable storage medium, wherein the processor-readable storage medium stores a computer program, wherein the computer program is used to enable the processor to execute a downlink positioning method on the network device side as described above, or the computer program is used to enable the processor to execute a downlink positioning method on the LMF side as described above, or the computer program is used to enable the processor to execute a downlink positioning method on the terminal side as described above.

In the embodiments of the present disclosure, the network device receives a downlink positioning request message sent by the LMF, the network device determines multiple positioning measurement time points, information of the respective positioning measurement resource corresponding to each of the positioning measurement time points, and satellite information corresponding to each of the positioning measurement resources, and sends the above information to the LMF, which sends the above information to the terminal, and the terminal performs downlink positioning measurement based on the above information. Since the satellite is in a moving state, the satellite will be located at multiple different positions corresponding to multiple positioning measurement time points, respectively. Thus, the downlink positioning measurements at respective multiple positioning measurement time points can be equivalent to the multi-TRP positioning measurement in related positioning method, thereby achieving the downlink positioning method of the terminal position through a single satellite, and implementing the downlink positioning in the satellite Internet system.

### BRIEF DESCRIPTION OF THE DRAWINGS

FIG. 1a is a schematic diagram of the LCS positioning service process in the related art;
FIG. 1b is a schematic diagram of the interaction process between the LMF and the gNB in the downlink positioning process in the related art;
FIG. 1c is a schematic diagram of the interaction process between the LMF and the UE in the downlink positioning process in the related art;
FIG. 1d is a schematic diagram of a network architecture applicable to the embodiments of the present disclosure;
FIG. 2 is a first flow chart of a downlink positioning method according to an embodiment of the present disclosure;
FIG. 3 is a second flow chart of a downlink positioning method according to an embodiment of the present disclosure;
FIG. 4 is a third flow chart of a downlink positioning method according to an embodiment of the present disclosure;
FIG. 5 is a schematic diagram of a network device according to an embodiment of the present disclosure;
FIG. 6 is a first structural schematic diagram of a LMF according to an embodiment of the present disclosure;
FIG. 7 is a first structural schematic diagram of a terminal according to an embodiment of the present disclosure;
FIG. 8 is a second structural schematic diagram of a network device according to an embodiment of the present disclosure;
FIG. 9 is a second structural schematic diagram of the LMF according to an embodiment of the present disclosure;
FIG. 10 is a second structural schematic diagram of the terminal according to an embodiment of the present disclosure.

### DETAILED DESCRIPTION

In order to make the technical problems, technical solutions and advantages to be solved by the present disclosure more clear, a detailed description will be given below with reference to the accompanying drawings and specific embodiments.

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects are in an "or" relationship.

In the embodiments of the present disclosure, the term "plurality of" refers to two or more than two, and other quantifiers are similar thereto.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by a person skilled in the art without creative work are within the scope of protection of the present disclosure.

The embodiments of the present disclosure provide a service data transmission method, a terminal, a network node and a storage medium to improve the transmission rate of the terminal.

In the embodiments of the present disclosure, the method and the device are based on the same application concept. Since the method and the device solve the problem in a similar principle, the implementation of the device and the implementation of the method can refer to each other, and the repeated parts will not be elaborated herein.

The schemes provided by the embodiments of the present disclosure can be applied to a variety of systems, especially the sixth generation mobile communication (6th-Generation, 6G) system. For example, the applicable system may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, an advanced long term evolution (LTE-A) system, a universal mobile telecommunication system (UMTS), a worldwide interoperability for microwave access (WiMAX) system, a 5G new radio (NR) system, a 6G system, etc. These various systems include terminal devices and network devices. The system may also include core network parts, such as the Evolved Packet System (EPS), 5G System (5G System, 5GS), etc.

In order to better understand the technical solution of the present disclosure, the following contents are first introduced.

### LoCation Services (LCS) Positioning Service Process

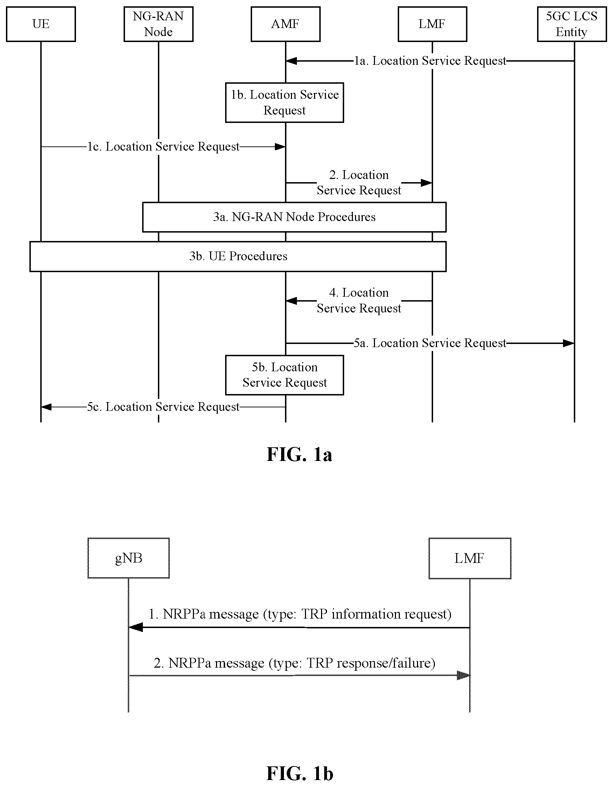

As shown in FIG. 1a, the LCS positioning service request from the User Equipment (UE)/LCS client/Access and Mobility Management Function (AMF) is sent to the LMF through the AMF, thus starting the LMF positioning service. The LMF finally obtains the terminal's location information through steps 3a and 3b, and sends it to the AMF through step 4, with information such as the terminal's location being carried.

### LTE Positioning Protocol (LPP) downlink positioning process

Referring to FIG. 1b, the LMF obtains relevant TRP information from each gNB. This process is a non-UE process, which means that it is not necessary to obtain this information every time to position the UE.

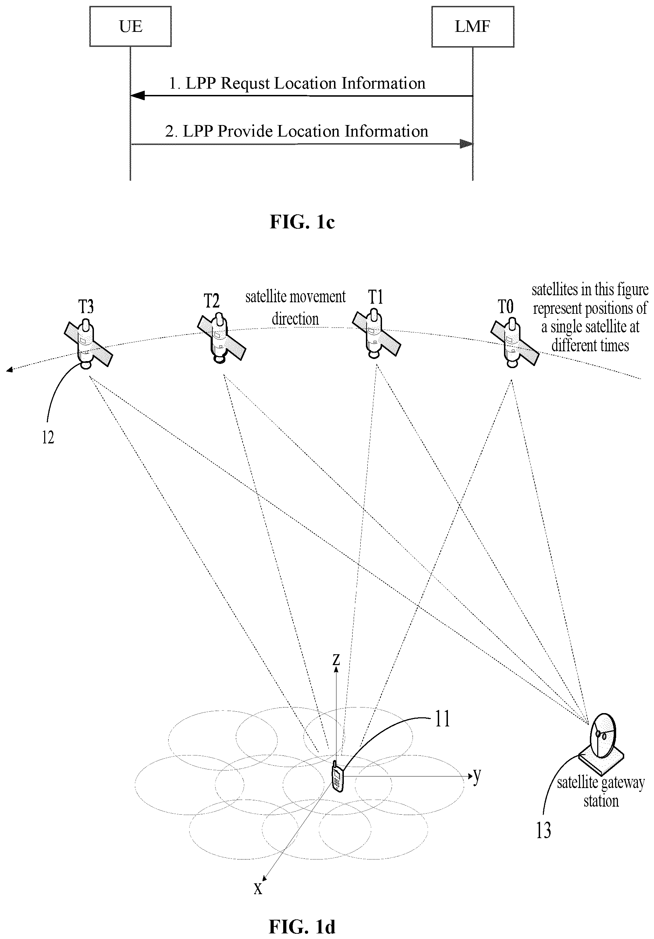

Referring to FIG. 1c, the LMF determines the PRS resources for the UE based on the TRP information of each base station, including the specific TRP location and the positioning reference signal (PRS) configuration corresponding to the TRP, and requests the UE to perform measurements, and the UE feeds back the results.

The Downlink (DL) positioning can be UE-based or UE-assisted.

In the former case, the UE calculates its own position based on the measurement of the PRS and the location information of the TRP and feeds them back to the LMF through the LPP. In the latter case, the UE feeds back the measurement result to the LMF, and the LMF calculates the UE position.

Referring to FIG. 1d, which is a schematic diagram of a network architecture applicable to the implementation of the present disclosure. As shown in FIG. 1d, it includes a terminal 11, a satellite 12 and a satellite gateway 13.

It should be noted that FIG. 1d shows a scenario in which a single satellite 12 is at different positions with different times along the moving direction, that is, as shown in FIG. 1d, the satellite 12 is at each of different positions at T0, T1, T2, and T3.

In actual application scenarios, the satellite gateway station 13 can be set up near the network device to obtain communication data from the network device, and then send the communication data to the satellite 12, and send the communication data to the terminal 11 through the satellite 12. Similarly, the communication data of the terminal can also be sent to the satellite gateway station 13 through the satellite 12, and then sent to the network device, thereby realizing communication data transmission under the satellite Internet.

In the embodiments of the present disclosure, the terminal 11 involved in the embodiment of the present disclosure may be a device that provides voice and/or data connectivity to a user, a handheld device with a wireless connection function, or other processing devices connected to a wireless modem. In different systems, the name of the terminal device may also be different. For example, in a 5G system, the terminal device may be called a user equipment (User Equipment, UE). The wireless terminal device can communicate with one or more core networks (Core Networks, CNs) via a radio access network (Radio Access Network, RAN). The wireless terminal device can be a mobile terminal device, such as a mobile phone (or "cellular" phone) and a computer with a mobile terminal device. For example, it can be a portable, pocket, handheld, computer-built-in or vehicle-mounted mobile device that exchanges language and/or data with a wireless access network. For example, personal communication service (Personal Communication Service, PCS) phone, cordless phone, session initiation protocol (Session Initiated Protocol, SIP) phone, wireless local loop (Wireless Local Loop, WLL) station, personal digital assistant (Personal Digital Assistant, PDA), Redcap terminal and other devices. The wireless terminal device may also be referred to as a system, a subscriber unit, a subscriber station, a mobile station, a mobile station, a remote station, an access point, a remote terminal device, an access terminal device, a user terminal device, a user agent, or a user device, which is not limited in the embodiments of the present disclosure.

In the embodiments of the present disclosure, the network device may be a base station, which may include multiple cells providing services for the terminal. Depending on the specific application scenario, the base station may also be called an access point, or may be a device in the access network that communicates with the wireless terminal device through one or more sectors on the air interface, or other names. The network device may be used to interchange received air frames with Internet Protocol (IP) packets, and serve as a router between the wireless terminal device and the rest of the access network, wherein the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in the long term evolution (LTE) system, a 5G base station (gNB) in the 5G network architecture (next generation system), a base station in the 6G system, or a Home evolved Node B (HeNB), a relay node, a femto, a pico, etc., which is not limited in the embodiments of the present disclosure. In some network structures, the network device may include a centralized unit (CU) and a distributed unit (DU), and the centralized unit and the distributed unit may also be geographically separated. In some network structures, the network device may include a Transmitting Receiving Point (TRP).

At present, the 4G/5G RAT dependent positioning methods are all implemented through the transmission and reception of multiple TRPs. Usually, multiple TRPs are deployed in each cell. However, in the satellite system, the specific network coverage is achieved by the satellites, and the TRP deployment is only possible on the satellite side. In addition, in satellite Internet system, the ground coverage is similar to that of the cellular network. Especially for the low-orbit constellation, it is difficult to require the UE to always be within the effective coverage of multiple satellites, and it is difficult to achieve multi-satellite positioning.

The current 4G/5G RAT dependent positioning method is difficult to directly apply to the satellite Internet system, especially in the scenario of the low-orbit constellation. It is necessary to provide a single-satellite based positioning method.

In addition, in the traditional RAT-dependent DL positioning method, the LMF knows in advance the deployment of the TRPs in the network and the configuration of the PRS of each TRP. The LMF determines which TRP PRS signal the UE should measure based on the DL positioning requirements and the location of the UE's current serving cell, and configures the relevant PRS to the UE through the LPP protocol.

However, in the low-orbit satellite system, the TRP and the satellite are integrated, and the TRP moves rapidly with the movement of the satellite. It is difficult for the LMF to determine the TRP/satellite required to locate a certain UE, and it is difficult to determine which PRS resource to be configured for the UE.

The DL positioning methods provided by the embodiment of the present disclosure is described in details below through some embodiments and their application scenarios in conjunction with the accompanying drawings.

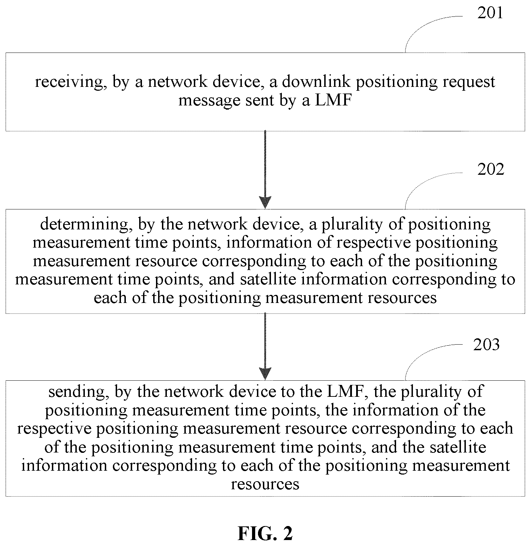

Referring to FIG. 2, an embodiment of the present disclosure provides a downlink positioning method, the method is performed by a network device, and optionally, the network device may be a base station. The method includes the following steps:
step 201: receiving, by a network device, a downlink positioning request message sent by a Location Management Function (LMF);
step 202: determining, by the network device, a plurality of positioning measurement time points, information of respective positioning measurement resource corresponding to each of the positioning measurement time points, and satellite information corresponding to each of the positioning measurement resources;
step 203: sending, by the network device to the LMF, the plurality of positioning measurement time points, the information of the respective positioning measurement resource corresponding to each of the positioning measurement time points, and the satellite information corresponding to each of the positioning measurement resources.

In the embodiments of the present disclosure, the network device receives a downlink positioning request message sent by the Location Management Function (LMF), the network device determines multiple positioning measurement time points, information of the respective positioning measurement resource corresponding to each of the positioning measurement time points, and satellite information corresponding to each of the positioning measurement resources, and sends them to the LMF, which sends the above information to the terminal, and the terminal performs the downlink positioning measurement based on the above information. Since the satellite is in a moving state, the satellite will be located at multiple different positions corresponding to multiple positioning measurement time points, respectively. Thus, the downlink positioning measurements at respective multiple positioning measurement time points can be equivalent to the multi-TRP positioning measurement in related positioning method, thereby achieving the downlink positioning method of the terminal position through a single satellite, and implementing the downlink positioning in the satellite Internet system.

The above-mentioned positioning measurement resource can specifically be positioning reference signal (PRS) information, that is, when the LMF requests the network device to perform downlink positioning, the network device determines the PRS information related to the downlink positioning measurement and feeds it back to the LMF, so that the LMF can determine the PRS resource configured for the UE.

It should be noted that the PRS resource determined by the network device may be from the serving cell, from the serving cell and the neighboring cell, or from a neighboring satellite.

The downlink positioning request message may be an LTE Positioning Protocol (LPP) message, for example:
(1) measurement request message on the NR Positioning Protocol a (NRPPa) interface; or
(2) a positioning information request message; or
(3) other newly defined NRPPa messages.

In embodiments of the present disclosure, the satellite information includes one or more of the followings:
(1) satellite identification information;
(2) satellite location information;
(3) TRP information, which includes the identification information of one or more TRPs and the location information of each TRP. That is, the identification and location information of the TRP set in the satellite can be used to indicate the relevant information of the satellite that performs downlink positioning measurement at each positioning measurement time point.

It should be noted that the above-mentioned satellite position information corresponds to the position of the satellite at the time point of the positioning measurement. If the LMF has ephemeris information, the satellite position at each time point can be calculated through the time point and the ephemeris information.

Specifically, if the LMF knows the ephemeris, the satellite information may only include the satellite identification (ID); if the LMF does not know the ephemeris, the satellite information may only include the satellite position information, although providing both information is not excluded.

In a possible implementation, the network device determines multiple positioning measurement time points specifically by the network device itself, that is, the LMF only sends a downlink positioning request message to the network device to request downlink positioning, and the specific positioning measurement time points are completely determined by the network device itself, for example: the LMF does not provide any time information, and the base station determines multiple time points for performing downlink positioning and the corresponding allocated resources based on information such as the ephemeris information.

In embodiments of the present disclosure, the downlink positioning request message includes time information of a downlink positioning measurement;
the determining, by the network device, the plurality of positioning measurement time points, including:
determining, by the network device, the plurality of positioning measurement time points according to the time information of the downlink positioning measurement.

In the embodiments of the present disclosure, the LMF provides some time information to the network device through the downlink positioning request message, and assists the network device in determining multiple positioning measurement time points.

It should be noted that LMF provides some time information to assist network device in determining multiple positioning measurement time points. Specifically, the LMF determines the specific time point and informs the base station, and the base station allocates resources accordingly. Alternatively, the LMF specifies some time information (such as time requirements related to positioning measurement), and the base station determines the specific time point and allocates resources accordingly.

In embodiments of the present disclosure, the time information of the downlink positioning measurement includes one or more of the followings.
(1) one or more time points for performing the downlink positioning measurement.
   It should be noted that the time information of the downlink positioning measurement includes multiple time points corresponding to the situation where the LMF determines the specific time point and informs the base station accordingly; the time information of the downlink positioning measurement includes a time point corresponding to the situation where the LMF requests the base station in batches, and the LMF sends the determined multiple positioning measurement time points to the service base station one by one.
(2) time requirement information for the downlink positioning measurement.

The time requirement information can reflect the positioning time requirement required by the downlink positioning service, so that the network device can determine the specific positioning measurement time point according to the time requirement information.

In the embodiments of the present disclosure, the time requirement information for downlink positioning measurement includes one or more of the followings:
(1) start time of downlink positioning measurement;
(2) end time of the downlink positioning measurement;
(3) a time interval between downlink positioning measurements, wherein for example, the time interval between two measurements should be at least m seconds;
(4) a quantity of the downlink positioning measurements, wherein for example, at least n measurements must be completed.

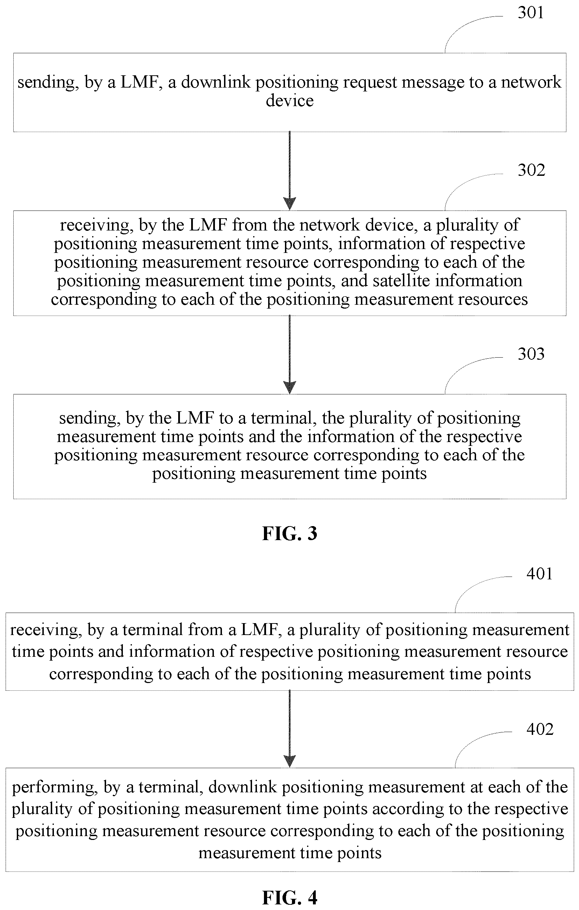

Referring to FIG. 3, an embodiment of the present disclosure provides a downlink positioning method, which is performed by the LMF, and includes the following steps:
step 301: sending, by a Location Management Function (LMF), a downlink positioning request message to a network device;
step 302: receiving, by the LMF from the network device, a plurality of positioning measurement time points, information of respective positioning measurement resource corresponding to each of the positioning measurement time points, and satellite information corresponding to each of the positioning measurement resources;
step 303: sending, by the LMF to a terminal, the plurality of positioning measurement time points and the information of the respective positioning measurement resource corresponding to each of the positioning measurement time points.

In the embodiments of the present disclosure, the network device receives a downlink positioning request message sent by the LMF, the network device determines multiple positioning measurement time points, information of the respective positioning measurement resource corresponding to each of the positioning measurement time points, and satellite information corresponding to each of the positioning measurement resources, and sends them to the LMF, which sends the above information to the terminal, and the terminal performs downlink positioning measurement based on the above information. Since the satellite is in a moving state, the satellite will be located at multiple different positions corresponding to multiple positioning measurement time points, respectively. Thus, the downlink positioning measurements at respective multiple positioning measurement time points can be equivalent to the multi-TRP positioning measurement in related positioning method, thereby achieving the downlink positioning method of the terminal position through a single satellite, and implementing the downlink positioning in the satellite Internet system.

The above positioning measurement resource may specifically be PRS information, that is, when the LMF requests the network device to perform downlink positioning, the network device determines the PRS information related to the downlink positioning measurement and feeds it back to the LMF, so that the LMF can determine the PRS resource configured for the UE.

It should be noted that the PRS resource determined by the network device may be from the serving cell, from the serving cell and the neighboring cell, or from a neighboring satellite.

The downlink positioning request message may be an LTE Positioning Protocol (LPP) message, for example:
(1) measurement request message on the NRPPa interface; or
(2) positioning information request message; or
(3) other newly defined NRPPa messages.

In a possible implementation, the method further includes:
sending, by the LMF to the terminal, the satellite information corresponding to each of the positioning measurement resources.

In the embodiments of the present disclosure, the LMF may provide satellite information corresponding to each of the positioning measurement resources to the terminal for the terminal to perform the downlink positioning measurement.

In embodiments of the present disclosure, the satellite information includes one or more of the followings:
(1) satellite identification information;
(2) satellite location information;
(3) TRP information, which includes the identification information of one or more TRPs and the location information of each TRP. That is, the identification and location information of the TRP set in the satellite can be used to indicate the relevant information of the satellite that performs downlink positioning measurement at each positioning measurement time point.

It should be noted that the above-mentioned satellite position information corresponds to the position of the satellite at the time point of the positioning measurement. If the LMF has ephemeris information, the satellite position at each time point can be calculated through the time point and the ephemeris information.

Specifically, if the LMF knows the ephemeris information, the satellite information may only include the satellite ID; if the LMF does not know the ephemeris information, the satellite information may only include the satellite position information, although providing both information is not excluded.

In a possible implementation, the network device determines multiple positioning measurement time points specifically by the network device itself, that is, the LMF only sends a downlink positioning request message to the network device to request downlink positioning, and the specific positioning measurement time points are completely determined by the network device itself, for example: LMF does not provide any time information, and the base station determines multiple time points for performing downlink positioning and the corresponding allocated resources based on information such as the ephemeris.

In embodiments of the present disclosure, the downlink positioning request message includes time information of a downlink positioning measurement;
the determining, by the network device, the plurality of positioning measurement time points, including:
determining, by the network device, the plurality of positioning measurement time points according to the time information of the downlink positioning measurement

In the embodiments of the present disclosure, the LMF provides some time information to the network device through a downlink positioning request message, and assists the network device in determining multiple positioning measurement time points.

It should be noted that the LMF provides some time information to assist network device in determining multiple positioning measurement time points. Specifically, the LMF determines the specific time point and informs the base station accordingly, and then the base station allocates resources accordingly. Alternatively, the LMF specifies some time information (such as time requirements related to positioning measurement), and the base station determines the specific time point and allocates the resources accordingly.

In embodiments of the present disclosure, the time information of the downlink positioning measurement includes one or more of the followings.
(1) one or more time points for performing the downlink positioning measurement.
   It should be noted that the time information of the downlink positioning measurement includes multiple time points corresponding to the situation where the LMF determines the specific time point and informs the base station accordingly; the time information of the downlink positioning measurement includes a time point corresponding to the situation where the LMF requests the base station in batches, and the LMF sends the determined multiple positioning measurement time points to the service base station one by one.
(2) time requirement information for the downlink positioning measurement.

The time requirement information can reflect the positioning time requirement required by the downlink positioning service, so that the network device can determine the specific positioning measurement time point according to the time requirement information.

In the embodiments of the present disclosure, the time requirement information for downlink positioning measurement includes one or more of the followings:
(1) start time of downlink positioning measurement;
(2) end time of the downlink positioning measurement;
(3) a time interval between downlink positioning measurements, wherein for example, the interval between two measurements should be at least m seconds;
(4) a quantity of the downlink positioning measurements, wherein for example, at least n measurements must be completed.

In a possible implementation, the method further includes:
receiving, by the LMF, a plurality of positioning measurement results sent by the terminal;
determining, by the LMF, a positioning calculation result according to the plurality of positioning measurement results;
wherein the plurality of positioning measurement results are obtained by the terminal through performing downlink positioning measurement at each of the plurality of positioning measurement time points according to the respective positioning measurement resource corresponding to each of the positioning measurement time points.

Optionally, when sending the positioning measurement result to the LMF, the terminal may also send a timestamp corresponding to each positioning measurement result.

In the embodiments of the present disclosure, it corresponds to a UE-assisted downlink positioning process, that is, the LMF calculates the UE position based on the UE positioning measurement result, the timestamp, and the position information of the satellite at each positioning measurement time point, thereby completing the downlink positioning.

In a possible implementation, the method further includes:
receiving, by the LMF, a positioning calculation result sent by the terminal;
wherein the positioning calculation result is determined by the terminal according to the plurality of positioning measurement results, and the plurality of positioning measurement results are obtained by the terminal through performing downlink positioning measurement at each of the positioning measurement time points according to the respective positioning measurement resource corresponding to each of the positioning measurement time points.

In the embodiment of the present disclosure, the corresponding downlink positioning process is based on the terminal (UE-based), that is, the UE calculates the UE position according to the measurement results of different PRSs at different times and the correspondence between the PRSs and the satellites, and feeds the UE position back to the LMF, thereby completing the downlink positioning.

Referring to FIG. 4, an embodiment of the present disclosure provides a downlink positioning method, which is performed by a terminal (UE), and includes the following steps:
step 401: receiving, by a terminal from a Location Management Function (LMF), a plurality of positioning measurement time points and information of respective positioning measurement resource corresponding to each of the positioning measurement time points;
step 402: performing, by a terminal, downlink positioning measurement at each of the plurality of positioning measurement time points according to the respective positioning measurement resource corresponding to each of the positioning measurement time points;
wherein the plurality of positioning measurement time points and the information of the respective positioning measurement resource corresponding to each of the positioning measurement time points are determined by the network device.

In the embodiments of the present disclosure,, the network device receives a downlink positioning request message sent by the LMF, the network device determines multiple positioning measurement time points, information of the respective positioning measurement resource corresponding to each of the positioning measurement time points, and satellite information corresponding to each of the positioning measurement resources, and sends them to the LMF, which sends the above information to the terminal, and the terminal performs downlink positioning measurement based on the above information. Since the satellite is in a moving state, the satellite will be located at multiple different positions corresponding to multiple positioning measurement time points, respectively. Thus, the downlink positioning measurements at respective multiple positioning measurement time points can be equivalent to the multi-TRP positioning measurement in related positioning method, thereby achieving the downlink positioning method of the terminal position through a single satellite, and implementing the downlink positioning in the satellite Internet system.

The above positioning measurement resource may specifically be PRS information, that is, when the LMF requests the network device to perform downlink positioning, the network device determines the PRS information related to the downlink positioning measurement and feeds it back to the LMF, so that the LMF can determine the PRS resource configured for the UE.

It should be noted that the PRS resources determined by the network device may be from the serving cell, from the serving cell and the neighboring cell, or from a neighboring satellite.

The downlink positioning request message may be an LTE Positioning Protocol (LPP) message, for example:
(1) measurement request message on the NRPPa interface; or
(2) positioning information request message; or
(3) other newly defined NRPPa messages.

In a possible implementation, the method further includes:
receiving, by the terminal from the LMF, satellite information corresponding to each of the positioning measurement resources;
wherein the satellite information corresponding to each of the positioning measurement resources is determined by the network device.

In an embodiment of the present disclosure, the LMF may provide satellite information corresponding to each of the positioning measurement resources to the terminal, such that the terminal performs the downlink positioning measurement.

In the embodiments of the present disclosure, the satellite information includes one or more of the followings:
(1) satellite identification information;
(2) satellite location information;
(3) TRP information, which includes the identification information of one or more TRPs and the location information of each TRP. That is, the identification and location information of the TRP set in the satellite can be used to indicate the relevant information of the satellite that performs downlink positioning measurement at each positioning measurement time point.

It should be noted that the above-mentioned satellite position information corresponds to the position of the satellite at the time point of the positioning measurement. If the LMF has ephemeris information, the satellite position at each time point can be calculated through the time point and the ephemeris information.

Specifically, if the LMF knows the ephemeris, the satellite information may only include the satellite ID; if the LMF does not know the ephemeris, the satellite information may only include the satellite position information, although providing both information is not excluded.

In a possible implementation, the network device determines multiple positioning measurement time points specifically by the network device itself, that is, the LMF only sends a downlink positioning request message to the network device to request downlink positioning, and the specific positioning measurement time points are completely determined by the network device itself, for example: the LMF does not provide any time information, and the base station determines multiple time points for performing downlink positioning and the corresponding allocated resources based on information such as the ephemeris information.

In a possible implementation, the method further includes:
obtaining, by the terminal, a plurality of positioning measurement results;
sending, by the terminal, the plurality of positioning measurement results to the LMF.

In the embodiments of the present disclosure, it corresponds to a UE-assisted downlink positioning process, that is, the LMF calculates the UE position based on the UE positioning measurement result, timestamp, and the position information of the satellite at each positioning measurement time point, thereby completing the downlink positioning.

In a possible implementation, the method further includes:
(1) obtaining, by the terminal, a plurality of positioning measurement results;
(2) determining, by the terminal, a positioning calculation result according to the plurality of positioning measurement results;
(3) sending, by the terminal, the positioning calculation result to the LMF

In the embodiment of the present disclosure, the corresponding downlink positioning process is based on the terminal (UE-based), that is, the UE calculates the UE position according to the measurement results of different PRSs at different times and the correspondence between the PRSs and the satellites, and feeds back to the LMF, thereby completing the downlink positioning.

In the following, it provides examples of the downlink positioning method according to the embodiments of the present disclosure.

### Example 1: support for DL positioning method in satellite Internet system (single satellite without handover, LMF providing positioning time requirement information)

Based on the positioning request of the LoCation Services (LCS), when a UE needs to be downlink positioned, the LMF initiates a DL positioning request to the serving base station of the UE. The request includes the time requirement information of the positioning measurement mentioned above (for example: 4 measurements are required, with an interval of not less than 5 seconds, the measurements need to be completed before time x).

Based on the request of the LMF, and/or such information as the current serving satellite, the serving cell, and the ephemeris of the UE, the base station determines the specific multiple time points, the satellite information at each time point, the PRS information at each time point and/or the correspondence between PRS and satellite for completing DL positioning measurement, and feeds them back to the LMF.

The LMF requests the UE to perform the DL positioning measurement through an LPP message. The message includes specific time points of the positioning measurement, and the PRS information corresponding to each time point, and/or the correspondence between the PRS and the satellite.

The UE performs relevant PRS measurements at each time point according to the above requirements and feeds back the measurement result.

If it is a UE-assisted positioning process, the UE feeds back the measurement result to the LMF, the LMF calculates the position of the UE based on the measurement result and the information such as the corresponding satellite position.

### Example 2: support for DL positioning method in satellite Internet system (single satellite without handover, LMF providing specific positioning time)

Example 2 is similar to Example 1, with the main difference as follows.

The LMF determines the specific time point for the downlink positioning and includes it in the DL positioning request to the gNB;

Based on the time point provided by the LMF and the information such as ephemeris, the gNB determines the satellite information at each time point, the PRS information at each time point, and/or the correspondence between PRS and satellite, and feeds them back to LMF.

### Example 3: support for DL positioning methods in satellite Internet systems (LMF determining positioning time and independently requesting resources)

The background of Example 3 is the same as that of Embodiment 2. Requesting the respective resource at each time point is equivalent to dividing the DL positioning process into multiple executions, each of which requires the base station to participate in the PRS resource allocation process. This implementation can support the continuity of positioning services during the handover process.

When the LMF is about to initiate the DL positioning process of a certain UE, the LMF determines the exact time point required for the DL positioning, such as: T0, T1, T2, T3.

Before each time point arrives, the LMF initiates a DL positioning request to the UE's serving base station. The request only specifies the time point of this positioning measurement. The UE only needs to complete one positioning measurement specified by the LMF each time. For each positioning measurement initiated by the LMF, the UE may be located in different cells, different satellites, or even different base stations.

This is a method to achieve continuity of positioning services (in the case of long positioning time).

The serving base station determines the PRS resource for the DL positioning (such as the PRS resource of the current serving cell and the PRS resource of the neighboring cell), the satellite information, and the mapping relationship between the PRS resource and the satellite information based on the time point information, the information of the UE's current serving cell, the ephemeris information, and etc., and feeds them back to the LMF.

The LMF initiates a DL positioning measurement process to the UE at a corresponding time point, the UE feeds back the measurement result, and the LMF stores the measurement result.

This process is repeated, and the LMF performs the positioning measurement process of the UE in batches, collects the measurement results of the UE from T0 to T3, and comprehensively calculates the UE's location information.

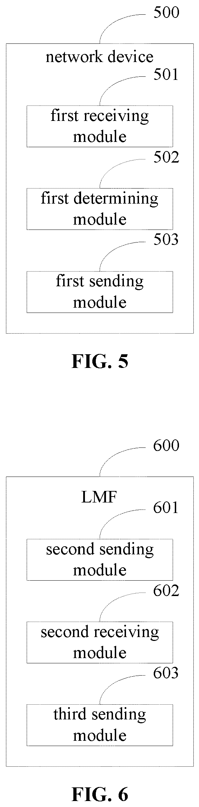

Referring to FIG. 5, an embodiment of the present disclosure further provides a network device 500, including:
a first receiving module 501, configured to receive a downlink positioning request message sent by the LMF;
a first determining module 502, configured to determine a plurality of positioning measurement time points, information of positioning measurement resources corresponding to each of the positioning measurement time points, and satellite information corresponding to each of the positioning measurement resources;
a first sending module 503, configured to send the plurality of positioning measurement time points, information of the respective positioning measurement resource corresponding to each of the positioning measurement time points, and satellite information corresponding to each of the positioning measurement resources to the LMF.

Optionally, the satellite information includes one or more of the followings:
satellite identification information;
satellite location information;
TRP information, wherein the TRP information includes identification information of one or more TRPs, and location information of each of the TRPs.

Optionally, the downlink positioning request message includes time information of a downlink positioning measurement;
the first determining module 502 is further configured to:
determine, according to the time information of the downlink positioning measurement, a plurality of positioning measurement time points.

Optionally, the time information of the downlink positioning measurement includes one or more of the followings:
one or more time points for performing the downlink positioning measurement;
time requirement information for the downlink positioning measurement.

Optionally, the time requirement information for the downlink positioning measurement includes one or more of the followings:
start time of the downlink positioning measurement;
end time of the downlink positioning measurement;
a time interval between the downlink positioning measurements;
a quantity of the downlink positioning measurements.

Referring to FIG. 6, the embodiment of the present disclosure further provides a LMF 600, including:
a second sending module 601, configured to send a downlink positioning request message to the network device;
a second receiving module 602, configured to receive a plurality of positioning measurement time points, information of respective positioning measurement resource corresponding to each of the positioning measurement time points, and satellite information corresponding to each of the positioning measurement resources, sent by the network device;
a third sending module 603, configured to send the plurality of positioning measurement time points and the information of the respective positioning measurement resource corresponding to each of the positioning measurement time points to the terminal.

Optionally, the LMF further includes:
a fourth sending module, configured to send the satellite information corresponding to each of the positioning measurement resources to the terminal.

Optionally, the satellite information includes one or more of the followings:
satellite identification information;
satellite location information;
TRP information, wherein the TRP information includes identification information of one or more TRPs, and location information of each of the TRPs.

Optionally, the downlink positioning request message includes time information of a downlink positioning measurement;
the time information of the downlink positioning measurement is used by the network device to determine the plurality of positioning measurement time points.

Optionally, the time information of the downlink positioning measurement includes one or more of the followings:
one or more time points for performing the downlink positioning measurement;
time requirement information for the downlink positioning measurement.

Optionally, the time requirement information for the downlink positioning measurement includes one or more of the followings:
start time of the downlink positioning measurement;
end time of the downlink positioning measurement;
a time interval between the downlink positioning measurements;
a quantity of the downlink positioning measurements.

Optionally, the LMF further includes:
a third receiving module, configured to receive a plurality of positioning measurement results sent by the terminal;
a second determining module, configured to determine a positioning calculation result according to the plurality of positioning measurement results;
wherein the plurality of positioning measurement results are obtained by the terminal through performing downlink positioning measurement at each of the plurality of positioning measurement time points according to the respective positioning measurement resource corresponding to each of the positioning measurement time points.

Optionally, the LMF further includes:
a fourth receiving module, configured to receive the positioning calculation result sent by the terminal;
wherein the positioning calculation result is determined by the terminal according to the plurality of positioning measurement results, and the plurality of positioning measurement results are obtained by the terminal through performing downlink positioning measurement at each of the plurality of positioning measurement time points according to the respective positioning measurement resource corresponding to each of the positioning measurement time points.

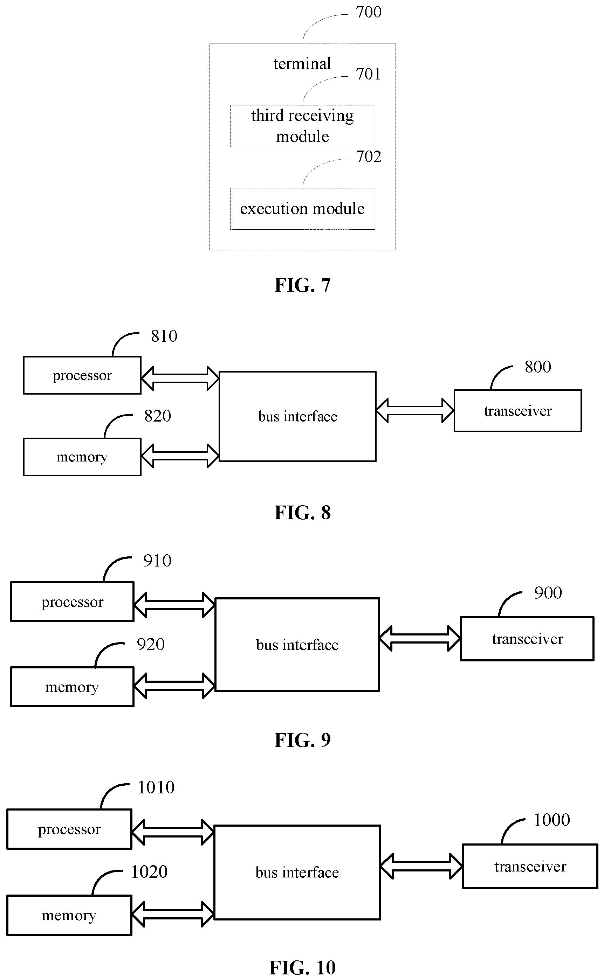

Referring to FIG. 7, an embodiment of the present disclosure further provides a terminal 700, including:
a fifth receiving module 701, configured to receive a plurality of positioning measurement time points and information of respective positioning measurement resource corresponding to each of the positioning measurement time points sent by the LMF;
an execution module 702, configured to perform downlink positioning measurement at each of the plurality of positioning measurement time points according to the respective positioning measurement resource corresponding to each of the positioning measurement time points;
wherein the plurality of positioning measurement time points and the information of the respective positioning measurement resource corresponding to each of the positioning measurement time points are determined by the network device.

Optionally, the terminal further includes:
a sixth receiving module, configured to receive satellite information corresponding to each of the positioning measurement resources sent by the LMF;
wherein the satellite information corresponding to each of the positioning measurement resources is determined by the network device.

Optionally, the satellite information includes one or more of the followings:
satellite identification information;
satellite location information;
TRP information, wherein the TRP information includes identification information of one or more TRPs, and location information of each of the TRPs.

Optionally, the terminal further includes:
a first obtaining module, configured to obtain a plurality of positioning measurement results;
a fourth sending module, configured to send the plurality of positioning measurement results to the LMF.

Optionally, the terminal further includes:
a second obtaining module, configured to obtain a plurality of positioning measurement results;
a third determining module, configured to determine a positioning calculation result according to the plurality of positioning measurement results;
a fifth sending module, configured to send the positioning calculation result to the LMF.

Please refer to FIG. 8, which is a structural diagram of a network device according to an embodiment of the present disclosure. As shown in FIG. 8, the network device includes a memory 820, a transceiver 800, and a processor 810.

The memory 820 is configured to store a computer program; the transceiver 800 is configured to send and receive data under the control of the processor 810; the processor 810 is configured to read the computer program in the memory 820 and perform the following operations:
receiving the downlink positioning request message sent by LMF;
determining a plurality of positioning measurement time points, information of positioning measurement resources corresponding to each of the positioning measurement time points, and satellite information corresponding to each of the positioning measurement resources;
sending the plurality of positioning measurement time points, information of the respective positioning measurement resource corresponding to each of the positioning measurement time points, and satellite information corresponding to each of the positioning measurement resources to the LMF.

In the embodiments of the present disclosure, in FIG. 8, the bus architecture may include any number of interconnected buses and bridges, specifically one or more processors represented by the processor 810 and various circuits of memory represented by the memory 820 are linked together. The bus architecture can also link various other circuits such as peripherals, voltage regulators, and power management circuits together, which are all known in the art, and therefore, are not further described herein. The bus interface provides an interface. The transceiver 800 can be a plurality of components, i.e., a transmitter and a receiver, providing a unit for communicating with various other devices on transmission media, and these transmission media include transmission media such as wireless channels, wired channels, and optical cables. For different user devices, the user interface 830 can also be an interface that can be connected to external and internal devices, and the connected devices include but are not limited to keypads, displays, speakers, microphones, joysticks, etc.

The processor 810 is responsible for managing the bus architecture and general processing, and the memory 820 can store data used by the processor 810 when performing operations.

Optionally, the processor 810 may be a Central Processing Unit (CPU), an ASIC (Application Specific Integrated Circuit), an FPGA (Field-Programmable Gate Array) or a CPLD (Complex Programmable Logic Device), and the processor may also adopt a multi-core architecture.

The processor may call the computer program stored in the memory to execute any of the methods provided by the embodiments of the present disclosure according to the obtained executable instructions. The processor and the memory can also be arranged physically separately.

Optionally, the satellite information includes one or more of the followings:
satellite identification information;
satellite location information;
TRP information, wherein the TRP information includes identification information of one or more TRPs, and location information of each of the TRPs.

Optionally, the downlink positioning request message includes time information of a downlink positioning measurement;
the processor executing the operation of the network device to determine the plurality of positioning measurement time points, includes:
determining, according to the time information of the downlink positioning measurement, the plurality of positioning measurement time points.

Optionally, the time information of the downlink positioning measurement includes one or more of the followings:
one or more time points for performing the downlink positioning measurement;
time requirement information for the downlink positioning measurement.

Optionally, the time requirement information for the downlink positioning measurement includes one or more of the followings:
start time of the downlink positioning measurement;
end time of the downlink positioning measurement;
a time interval between the downlink positioning measurements;
a quantity of the downlink positioning measurements.

Refer to FIG. 9, which is a structural diagram of an LMF according to an embodiment of the present disclosure. As shown in FIG. 9, the LMF includes a memory 920, a transceiver 900 and a processor 910.

The memory 920 is configured to store a computer program; the transceiver 900 is configured to send and receive data under the control of the processor 910; the processor 910 is configured to read the computer program in the memory 920 and perform the following operations:
sending a downlink positioning request message to a network device;
receiving a plurality of positioning measurement time points, information of positioning measurement resources corresponding to each of the positioning measurement time points, and satellite information corresponding to each of the positioning measurement resources, sent by the network device;
sending the plurality of positioning measurement time points and information of the respective positioning measurement resource corresponding to each of the positioning measurement time points to the terminal.

In the embodiments of the present disclosure, in FIG. 9, the bus architecture may include any number of interconnected buses and bridges, specifically one or more processors represented by the processor 910 and various circuits of memory represented by the memory 920 are linked together. The bus architecture can also link various other circuits such as peripheral devices, voltage regulators and power management circuits together, which are all known in the art, so they are not further described herein. The bus interface provides an interface. The transceiver 900 can be a plurality of components, i.e., a transmitter and a receiver, providing a unit for communicating with various other devices on transmission media, and these transmission media include transmission media such as wireless channels, wired channels, and optical cables. For different user devices, the user interface 930 can also be an interface that can be connected to the required devices externally and internally, and the connected devices include but are not limited to a keypad, a display, a speaker, a microphone, a joystick, etc.

The processor 910 is responsible for managing the bus architecture and general processing, and the memory 920 can store data used by the processor 910 when performing operations.

Optionally, the processor 910 may be a CPU, an ASIC, an FPGA or a CPLD, and the processor may also adopt a multi-core architecture.

The processor may call the computer program stored in the memory to execute any of the methods provided by the embodiments of the present disclosure according to the obtained executable instructions. The processor and the memory can also be arranged physically separately.

Optionally, the satellite information includes one or more of the followings:
satellite identification information;
satellite location information;
TRP information, wherein the TRP information includes identification information of one or more TRPs, and location information of each of the TRPs.

Optionally, the downlink positioning request message includes time information of a downlink positioning measurement;
the time information of the downlink positioning measurement is used by the network device to determine the plurality of positioning measurement time points.

Optionally, the time information of the downlink positioning measurement includes one or more of the followings:
one or more time points for performing the downlink positioning measurement;
time requirement information for the downlink positioning measurement.

Optionally, the time requirement information for the downlink positioning measurement includes one or more of the followings:
start time of the downlink positioning measurement;
end time of the downlink positioning measurement;
a time interval between the downlink positioning measurements;
a quantity of the downlink positioning measurements.

Optionally, the processor is further configured to:
send the satellite information corresponding to each of the positioning measurement resources to the terminal.

Optionally, the processor is further configured to:
receive a plurality of positioning measurement results sent by the terminal;
determine a positioning calculation result according to the plurality of positioning measurement results;
wherein the plurality of positioning measurement results are obtained by the terminal through performing downlink positioning measurement at each of the plurality of positioning measurement time points according to the respective positioning measurement resource corresponding to each of the positioning measurement time points.

Optionally, the processor is further configured to:
receive a positioning calculation result sent by the terminal;
wherein the positioning calculation result is determined by the terminal according to the plurality of positioning measurement results, and the plurality of positioning measurement results are obtained by the terminal through performing downlink positioning measurement at each of the plurality of positioning measurement time points according to the respective positioning measurement resource corresponding to each of the positioning measurement time points.

Refer to FIG. 10, which is a structural diagram of a terminal according to an embodiment of the present disclosure. As shown in FIG. 10, the terminal includes a memory 1020, a transceiver 1000 and a processor 1010.

The memory 1020 is configured to store a computer program; the transceiver 1000 is configured to send and receive data under the control of the processor 1010; the processor 1010 is configured to read the computer program in the memory 1020 and perform the following operations:
receiving, from a Location Management Function (LMF), a plurality of positioning measurement time points and information of respective positioning measurement resource corresponding to each of the positioning measurement time points;
performing downlink positioning measurement at each of the plurality of positioning measurement time points according to the respective positioning measurement resource corresponding to each of the positioning measurement time points;
wherein the plurality of positioning measurement time points and the information of the respective positioning measurement resource corresponding to each of the positioning measurement time points are determined by the network device.

In the embodiments of the present disclosure, in FIG. 10, the bus architecture may include any number of interconnected buses and bridges, specifically one or more processors represented by the processor 1010 and various circuits of memory represented by the memory 1020 are linked together. The bus architecture can also link various other circuits such as peripherals, voltage regulators, and power management circuits together, which are all known in the art, so they are not further described herein. The bus interface provides an interface. The transceiver 1000 can be a plurality of components, i.e., a transmitter and a receiver, providing a unit for communicating with various other devices on transmission media, and these transmission media include transmission media such as wireless channels, wired channels, and optical cables. For different user devices, the user interface 1030 can also be an interface that can connect external and internal devices, and the connected devices include but are not limited to keypads, displays, speakers, microphones, joysticks, etc.

The processor 1010 is responsible for managing the bus architecture and general processing, and the memory 1020 can store data used by the processor 1010 when performing operations.

Optionally, the processor 1010 may be a CPU, an ASIC, an FPGA or a CPLD, and the processor may also adopt a multi-core architecture.

The processor may call the computer program stored in the memory to execute any of the methods provided by the embodiments of the present disclosure according to the obtained executable instructions. The processor and the memory can also be arranged physically separately.

Optionally, the processor 1010 is further configured to:
receive, from the LMF, satellite information corresponding to each of the positioning measurement resources;
wherein the satellite information corresponding to each of the positioning measurement resources is determined by the network device.

Optionally, the satellite information includes one or more of the followings:
satellite identification information;
satellite location information;
TRP information, wherein the TRP information includes identification information of one or more TRPs, and location information of each of the TRPs.

Optionally, the processor 1010 is further configured to:
obtain a plurality of positioning measurement results;
send the plurality of positioning measurement results to the LMF.

Optionally, the processor 1010 is further configured to:
obtain a plurality of positioning measurement results;
determine a positioning calculation result according to the plurality of positioning measurement results;
send the positioning calculation result to the LMF.

It should be noted here that the above-mentioned network device, LMF and terminal according to an embodiment of the present disclosure can implement all the method steps implemented in the above-mentioned method embodiments, and can achieve the same technical effect. The parts and beneficial effects that are the same as the method embodiments will not be described in detail herein.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the related art or all or part of the technical solution can be embodied in the form of a software product. The computer software product is stored in a storage medium, including instructions to enable a computer device (which can be a personal computer, server, or network device, etc.) or a processor to perform all or part of the steps of the method described in each embodiment of the present disclosure. The aforementioned storage medium includes: USB flash disk, mobile hard disk, read-only memory (Read-Only Memory, ROM), random access memory (Random Access Memory, RAM), magnetic disk or optical disk and other media that can store program codes.

An embodiment of the present disclosure further provides a processor-readable storage medium, wherein the processor-readable storage medium stores a computer program, wherein the computer program is used to enable the processor to execute a downlink positioning method, or the computer program is used to enable the processor to execute a downlink positioning method.

The processor-readable storage medium may be any available medium or data storage device that can be accessed by the processor, including but not limited to magnetic storage (e.g., floppy disk, hard disk, magnetic tape, magneto-optical disk (MO), etc.), optical storage (e.g., compact disk (CD), digital video disk (DVD), Blu-ray Disc (BD), high-definition versatile disc (HVD), etc.), and semiconductor storage (e.g., read-only memory (ROM), erasable programmable read-only memory (EPROM), electrically erasable programmable read-only memory (EEPROM), non-volatile memory (NAND FLASH), solid state disk or solid state drive (SSD)), etc.

The person skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or block in the flowchart and/or block diagram, as well as the combination of the processes and/or blocks in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one block or multiple blocks in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more blocks in the block diagram.

These processor-executable instructions may also be loaded onto a computer or other programmable data processing device, so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device for implementation. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described herein can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASICs), or one or more digital signal processors (DSPs), or one or more field programmable gate arrays (FPGAs). For another example, when the module above is implemented in the form of a processing element calling the program code, the processing element may be a general-purpose processor, such as a central processing unit (CPU) or other processor that can call program code. For another example, these modules may be integrated together and implemented in the form of a system-on-a-chip (SOC).

The terms "first", "second", etc. in the description and claims of the present disclosure are used to distinguish similar objects, and are not necessarily used to describe a specific order or sequence. It should be understood that the data used in this way can be interchanged where appropriate, so that the embodiments of the present disclosure described herein, such as those illustrated or described herein, are implemented in a sequence other than the order. In addition, the terms "including" and "having" and any of their variations are intended to cover non-exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and/or" in the description and claims represents at least one of the connected objects, such as A and/or B and/or C, indicating the inclusion of 7 situations including single A, single B, single C, and both A and B exist, both B and C exist, both A and C exist, and both A, B and C exist. Similarly, the use of "at least one of A or B" in the specification and claims should be understood as "single A, single B, or both A and B exist".

Obviously, the person skilled in the art can make various changes and modifications to the present disclosure without departing from the spirit and scope of the present disclosure. Thus, if these changes and modifications of the present disclosure fall within the scope of the claims of the present disclosure and their equivalents, the present disclosure is also intended to include these changes and modifications.

## Claims

1. A downlink positioning method, comprising:
receiving, by a network device, a downlink positioning request message sent by a Location Management Function (LMF);
determining, by the network device, a plurality of positioning measurement time points, information of respective positioning measurement resource corresponding to each of the positioning measurement time points, and satellite information corresponding to each of the positioning measurement resources;
sending, by the network device to the LMF, the plurality of positioning measurement time points, the information of the respective positioning measurement resource corresponding to each of the positioning measurement time points, and the satellite information corresponding to each of the positioning measurement resources.

2. The method according to claim 1, wherein the satellite information comprises one or more of the followings:
satellite identification information;
satellite location information;
Transmission-Reception Point (TRP) information, wherein the TRP information comprises identification information of one or more TRPs and location information of each of the TRPs.

3. The method according to claim 1, wherein the downlink positioning request message comprises time information of a downlink positioning measurement;
the determining, by the network device, the plurality of positioning measurement time points, comprising:
determining, by the network device, the plurality of positioning measurement time points according to the time information of the downlink positioning measurement.

4. The method according to claim 3, wherein the time information of the downlink positioning measurement comprises one or more of the followings:
one or more time points for performing the downlink positioning measurement;
time requirement information for the downlink positioning measurement.

5. The method according to claim 4, wherein the time requirement information of the downlink positioning measurement comprises one or more of the followings:
start time of the downlink positioning measurement;
end time of the downlink positioning measurement;
a time interval between the downlink positioning measurements;
a quantity of the downlink positioning measurements.

6. A downlink positioning method, comprising:
sending, by a Location Management Function (LMF), a downlink positioning request message to a network device;
receiving, by the LMF from the network device, a plurality of positioning measurement time points, information of respective positioning measurement resource corresponding to each of the positioning measurement time points, and satellite information corresponding to each of the positioning measurement resources;
sending, by the LMF to a terminal, the plurality of positioning measurement time points and the information of the respective positioning measurement resource corresponding to each of the positioning measurement time points.

7. The method according to claim 6, further comprising:
sending, by the LMF to the terminal, the satellite information corresponding to each of the positioning measurement resources.

8. The method according to claim 6 or 7, wherein the satellite information comprises one or more of the followings:
satellite identification information;
satellite location information;
Transmission-Reception Point (TRP) information, wherein the TRP information comprises identification information of one or more TRPs and location information of each of the TRPs.

9. The method according to claim 6, wherein the downlink positioning request message comprises time information of a downlink positioning measurement;
the time information of the downlink positioning measurement is used by the network device to determine the plurality of positioning measurement time points.

10. The method according to claim 8, wherein the time information of the downlink positioning measurement comprises one or more of the followings:
one or more time points for performing the downlink positioning measurement;
time requirement information for the downlink positioning measurement.

11. The method according to claim 10, wherein the time requirement information of the downlink positioning measurement comprises one or more of the followings:
start time of the downlink positioning measurement;
end time of the downlink positioning measurement;
a time interval between the downlink positioning measurements;
a quantity of the downlink positioning measurements.

12. The method according to claim 6, further comprising:
receiving, by the LMF, a plurality of positioning measurement results sent by the terminal;
determining, by the LMF, a positioning calculation result according to the plurality of positioning measurement results;
wherein the plurality of positioning measurement results are obtained by the terminal through performing downlink positioning measurement at each of the plurality of positioning measurement time points according to the respective positioning measurement resource corresponding to each of the positioning measurement time points.

13. The method according to claim 6, further comprising:
receiving, by the LMF, a positioning calculation result sent by the terminal;
wherein the positioning calculation result is determined by the terminal according to the plurality of positioning measurement results, and the plurality of positioning measurement results are obtained by the terminal through performing downlink positioning measurement at each of the plurality of positioning measurement time points according to the respective positioning measurement resource corresponding to each of the positioning measurement time points.

14. A downlink positioning method, comprising:
receiving, by a terminal from a Location Management Function (LMF), a plurality of positioning measurement time points and information of respective positioning measurement resource corresponding to each of the positioning measurement time points;
performing, by a terminal, downlink positioning measurement at each of the plurality of positioning measurement time points according to the respective positioning measurement resource corresponding to each of the positioning measurement time points;
wherein the plurality of positioning measurement time points and the information of the respective positioning measurement resource corresponding to each of the positioning measurement time points are determined by a network device.

15. The method according to claim 14, further comprising:
receiving, by the terminal from the LMF, satellite information corresponding to each of the positioning measurement resources;
wherein the satellite information corresponding to each of the positioning measurement resources is determined by the network device.

16. The method according to claim 15, wherein the satellite information comprises one or more of the followings:
satellite identification information;
satellite location information;
Transmission-Reception Point (TRP) information, wherein the TRP information comprises identification information of one or more TRPs and location information of each of the TRPs.

17. The method according to claim 14, further comprising:
obtaining, by the terminal, a plurality of positioning measurement results;
sending, by the terminal, the plurality of positioning measurement results to the LMF.

18. The method according to claim 14, further comprising:
obtaining, by the terminal, a plurality of positioning measurement results;
determining, by the terminal, a positioning calculation result according to the plurality of positioning measurement results;
sending, by the terminal, the positioning calculation result to the LMF.

19. A network device comprising: a memory, a transceiver and a processor, wherein
the memory is configured for storing a computer program; the transceiver is configured for sending and receiving data under the control of the processor; and the processor is configured for reading the computer program in the memory and performing following operations:
receiving a downlink positioning request message sent by a Location Management Function (LMF);
determining a plurality of positioning measurement time points, information of respective positioning measurement resource corresponding to each of the positioning measurement time points, and satellite information corresponding to each of the positioning measurement resources;
sending, to the LMF, the plurality of positioning measurement time points, the information of the respective positioning measurement resource corresponding to each of the positioning measurement time points, and the satellite information corresponding to each of the positioning measurement resources.

20. The network device according to claim 19, wherein the satellite information comprises one or more of the followings:
satellite identification information;
satellite location information;
Transmission-Reception Point (TRP) information, wherein the TRP information comprises identification information of one or more TRPs and location information of each of the TRPs.

21. The network device according to claim 19, wherein the downlink positioning request message comprises time information of a downlink positioning measurement;
the processor configured to execute the operation of the network device to determine multiple positioning measurement time points comprises:
the network device determines the plurality of positioning measurement time points according to the time information of the downlink positioning measurement.

22. The network device according to claim 21, wherein the time information of the downlink positioning measurement comprises one or more of the followings:
one or more time points for performing the downlink positioning measurement;
time requirement information for the downlink positioning measurement.

23. The network device according to claim 22, wherein the time requirement information of the downlink positioning measurement comprises one or more of the followings:
start time of the downlink positioning measurement;
end time of the downlink positioning measurement;
a time interval between the downlink positioning measurements;
a quantity of the downlink positioning measurements.

24. A Location Management Function (LMF), comprising: a memory, a transceiver and a processor, wherein
the memory is configured for storing a computer program; the transceiver is configured for sending and receiving data under the control of the processor; and the processor is configured for reading the computer program in the memory and performing following operations:
sending a downlink positioning request message to a network device;
receiving, from the network device, a plurality of positioning measurement time points, information of respective positioning measurement resource corresponding to each of the positioning measurement time points, and satellite information corresponding to each of the positioning measurement resources;
sending, to a terminal, the plurality of positioning measurement time points and the information of the respective positioning measurement resource corresponding to each of the positioning measurement time points.

25. The LMF according to claim 24, wherein the processor is further configured to:
send, to the terminal, the satellite information corresponding to each of the positioning measurement resources.

26. The LMF according to claim 24 or 25, wherein the satellite information comprises one or more of the followings:
satellite identification information;
satellite location information;
Transmission-Reception Point (TRP) information, wherein the TRP information comprises identification information of one or more TRPs and location information of each of the TRPs.

27. The LMF according to claim 24, wherein the downlink positioning request message comprises time information of a downlink positioning measurement;
the time information of the downlink positioning measurement is used by the network device to determine the plurality of positioning measurement time points.

28. The LMF according to claim 27, wherein the time information of the downlink positioning measurement comprises one or more of the followings:
one or more time points for performing the downlink positioning measurement;
time requirement information for the downlink positioning measurement.

29. The LMF according to claim 28, wherein the time requirement information of the downlink positioning measurement comprises one or more of the followings:
start time of the downlink positioning measurement;
end time of the downlink positioning measurement;
a time interval between the downlink positioning measurements;
a quantity of the downlink positioning measurements.

30. The LMF according to claim 24, wherein the processor is further configured to:
receive a plurality of positioning measurement results sent by the terminal;
determine a positioning calculation result according to the plurality of positioning measurement results;
wherein the plurality of positioning measurement results are obtained by the terminal through performing downlink positioning measurement at each of the plurality of positioning measurement time points according to the respective positioning measurement resource corresponding to each of the positioning measurement time points.

31. The LMF according to claim 24, wherein the processor is further configured to:
receive a positioning calculation result sent by the terminal;
wherein the positioning calculation result is determined by the terminal according to the plurality of positioning measurement results, and the plurality of positioning measurement results are obtained by the terminal through performing downlink positioning measurement at each of the plurality of positioning measurement time points according to the respective positioning measurement resource corresponding to each of the positioning measurement time points.

32. A terminal, comprising: a memory, a transceiver and a processor, wherein
the memory is configured for storing a computer program; the transceiver is configured for sending and receiving data under the control of the processor; and the processor is configured for reading the computer program in the memory and performing following operations:
receiving, from a Location Management Function (LMF), a plurality of positioning measurement time points and information of respective positioning measurement resource corresponding to each of the positioning measurement time points;
performing downlink positioning measurement at each of the plurality of positioning measurement time points according to the respective positioning measurement resource corresponding to each of the positioning measurement time points;
wherein the plurality of positioning measurement time points and the information of the respective positioning measurement resource corresponding to each of the positioning measurement time points are determined by the network device.

33. The terminal according to claim 32, wherein the processor is further configured to:
receive, from the LMF, satellite information corresponding to each of the positioning measurement resources;
wherein the satellite information corresponding to each of the positioning measurement resources is determined by the network device.

34. The terminal according to claim 33, wherein the satellite information comprises one or more of the followings:
satellite identification information;
satellite location information;
Transmission-Reception Point (TRP) information, wherein the TRP information comprises identification information of one or more TRPs and location information of each of the TRPs.

35. The terminal according to claim 32, wherein the processor is further configured to:
obtain a plurality of positioning measurement results;
send the plurality of positioning measurement results to the LMF.

36. The terminal according to claim 32, wherein the processor is further configured to:
obtain a plurality of positioning measurement results;
determine a positioning calculation result according to the plurality of positioning measurement results;
send the positioning calculation result to the LMF.

37. A network device, comprising:
a first receiving module, configured to receive a downlink positioning request message sent by the LMF;
a first determination module, configured to determine a plurality of positioning measurement time points, information of respective positioning measurement resource corresponding to each of the positioning measurement time points, and satellite information corresponding to each of the positioning measurement resources;
a first sending module, configured to send, to the LMF, the plurality of positioning measurement time points, the information of the respective positioning measurement resource corresponding to each of the positioning measurement time points, and the satellite information corresponding to each of the positioning measurement resources.

38. A Location Management Function (LMF), comprising:
a second sending module, configured to send a downlink positioning request message to a network device;
a second receiving module, configured to receive, from the network device, a plurality of positioning measurement time points, information of respective positioning measurement resource corresponding to each of the positioning measurement time points, and satellite information corresponding to each of the positioning measurement resources;
a third sending module, configured to send, to the terminal, the plurality of positioning measurement time points and the information of the respective positioning measurement resource corresponding to each of the positioning measurement time points.

39. A terminal comprising:
a fifth receiving module, configured to receive, from a Location Management Function (LMF), a plurality of positioning measurement time points and information of respective positioning measurement resource corresponding to each of the positioning measurement time points;
an execution module, configured to perform downlink positioning measurement at each of the plurality of positioning measurement time points according to the respective positioning measurement resource corresponding to each of the positioning measurement time points;
wherein the plurality of positioning measurement time points and the information of the respective positioning measurement resource corresponding to each of the positioning measurement time points are determined by a network device.

40. A processor-readable storage medium, wherein the processor-readable storage medium stores a computer program, wherein the computer program is used to cause a processor to execute the downlink positioning method according to any one of claims 1 to 5, or the computer program is used to cause a processor to execute the downlink positioning method according to any one of claims 6 to 13, or the computer program is used to cause the processor to execute the downlink positioning method according to any one of claims 14 to 18.
